(19) Europäisches Patentamt
European Patent Office
Office européen des brevets

(11) EP 3 284 760 A1

(12) # EUROPEAN PATENT APPLICATION

published in accordance with Art. 153(4) EPC

(43) Date of publication:
**21.02.2018 Bulletin 2018/08**

(21) Application number: **16768213.7**

(22) Date of filing: **12.02.2016**

(51) Int Cl.:
***C08F 16/10*** *(2006.01)*

(86) International application number:
**PCT/JP2016/054203**

(87) International publication number:
**WO 2016/152310 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.03.2015 JP 2015062052**

(71) Applicant: **Zeon Corporation**
**Tokyo 100-8246 (JP)**

(72) Inventors:
- **HOUKAWA Takashi**
  **Tokyo 100-8246 (JP)**
- **KOMATSUBARA Takuya**
  **Tokyo 100-8246 (JP)**
- **FUJII Kensaku**
  **Tokyo 100-8246 (JP)**
- **SHIMIZU Yasuhiro**
  **Tokyo 100-8246 (JP)**
- **NAMIKOSHI Takeshi**
  **Kitami**
  **Hokkaido 090-0015 (JP)**
- **WATANABE Shinji**
  **Kitami**
  **Hokkaido 090-0015 (JP)**
- **MURATA Miki**
  **Kitami**
  **Hokkaido 090-0015 (JP)**

(74) Representative: **Maiwald Patentanwalts GmbH**
**Elisenhof**
**Elisenstrasse 3**
**80335 München (DE)**

(54) **POLYMER, MOLDING MATERIAL AND RESIN MOLDED BODY**

(57) The present invention relates to: a polymer having a repeating unit represented by the following formula (1); a forming material containing the polymer; and a resin formed article obtained by forming the forming material. In the formula, $X^1$ and $X^2$ each independently represent an oxygen atom or a chemical single bond, and $r^1$ to $r^3$ each independently represent a hydrogen atom or an alkyl group having 1 to 6 carbon atoms; Y represents a monovalent group having a specific composition; and $n^1$ and $n^2$ each independently represent an integer of 1 to 4. The present invention provides: a novel polymer useful as a resin component of an optical formed article, a forming material containing the polymer, and a resin formed article obtained by forming the forming material.

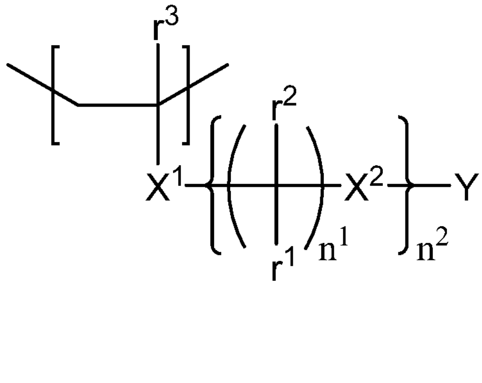

(1)

EP 3 284 760 A1

## Description

### Technical Field

The present invention relates to a novel polymer useful as the resin component of an optical formed article, a forming material containing the polymer, and a resin formed article obtained by forming the forming material.

### Background Art

The resin component of an optical formed article such as a lens is required to be excellent in transparency. From such a viewpoint, as the resin components of optical formed articles, the following have hitherto been used: polymethyl methacrylate, polycarbonate, diethylene glycol bisallyl carbonate, polycyclohexyl methacrylate, poly(4-methylpentene), amorphous alicyclic polyolefin, polycyclic norbornene polymer, vinyl alicyclic hydrocarbon polymer and the like.

For example, Patent Literature 1 describes an optical formed article obtained by using a forming material containing a vinyl alicyclic hydrocarbon polymer having a specific repeating unit.

In addition, recently, lenses of mobile phone cameras and the like have been required to be further thinner and to have further higher resolution. Accordingly, there have been demanded resins being high in refractive index and low in birefringence.

### Citation List

### Patent Literature

Patent Literature 1: Japanese Patent Laid-Open No. 2009-197139

### Summary of Invention

### Technical Problem

According to the investigation performed by the present inventors, it has been found that by increasing the value of the ratio between the carbon atoms and the hydrogen atoms (number of carbon atoms/number of hydrogen atoms) constituting a polymer, the refractive index of the polymer having a high Abbe number tends to be increased, and by increasing the proportion of the repeating unit having an aromatic ring in the polymer, the refractive index of the polymer having a low Abbe number tends to be increased. It has also been found that when the refractive index of the polymer is increased by these methods, the glass transition temperature of the polymer tends to be similarly increased.

A polymer having a high glass transition temperature is preferable from the viewpoint of heat resistance. However, for example, in the case where a forming material being excellent in formability is required, or in the case where the reduction of the residual stress of a formed article is achieved, the glass transition temperature of the polymer is preferably appropriately low.

Accordingly, depending on the applications or the like of the formed article, a polymer having a high refractive index and a low birefringence, and having an appropriately low glass transition temperature has also been desired.

The invention was conceived in view of the above situation. An object of the present invention is to provide a novel polymer useful as a resin component of an optical formed article, a forming material containing the polymer, and a resin formed article obtained by forming the forming material.

### Solution to Problem

The present inventors conducted extensive studies with regard to a polymer having a high refractive index and a low birefringence in order to solve the above problem. As a result, the present inventors found that by introducing a partial structure having an effect of decreasing the glass transition temperature and a partial structure having an effect of increasing the refractive index into the side chains of a polymer, a polymer having a high refractive index and a low birefringence, and having a relatively low glass transition temperature is obtained. This finding has led to the completion of the present invention.

Thus, according to the present invention, the polymers [1] to [7], the forming material [8], and the resin formed article [9] described below are provided.

[1] A polymer having a repeating unit represented by the following formula (1):

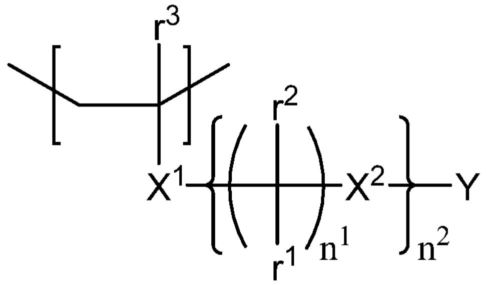

(1)

[$X^1$ and $X^2$ each independently represent an oxygen atom or a chemical single bond, and $r^1$ to $r^3$ each independently represent a hydrogen atom or an alkyl group having 1 to 6 carbon atoms; Y represents a monovalent group having a composition represented by the following formula (2):

$C_pH_qO_r$ (2)

(p represents an integer of 8 to 21, q represents an integer of 7 to 40, the value of (p/q) is larger than 0.5, and r represents an integer of 0 to 3); and $n^1$ and $n^2$ each independently represent an integer of 1 to 4].

[2] The polymer according to [1], wherein Y is a group represented by the following formula (3):

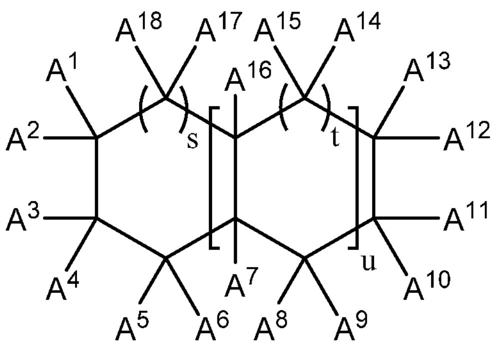

(3)

(any one of $A^1$ to $A^{18}$ is a dangling bond, and the rest of $A^1$ to $A^{18}$ each independently represent a hydrogen atom, a halogen atom, a hydrocarbon group, or a hydrocarbon group having an oxygen atom; $A^1$ to $A^{18}$ may be bonded to each other to form a ring(s); and s represents an integer of 0 to 2, t represents an integer of 0 to 2, and u represents an integer equal to 0 or 1 or more).

[3] The polymer according to [2], wherein Y is a group represented by any of the following formulas (5) to (7) :

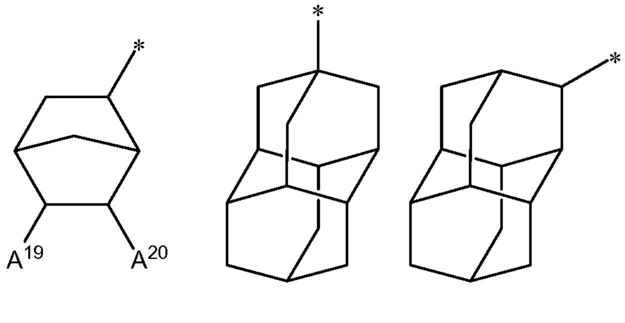

(5) (6) (7)

($A^{19}$ and $A^{20}$ each independently represent a hydrogen atom, a halogen atom, a hydrocarbon group, or a hydrocarbon group having an oxygen atom; and $A^{19}$ and $A^{20}$ may be bonded to each other to form a ring; and * represents a dangling bond).

[4] The polymer according to any one of [1] to [3], wherein the content of the repeating unit represented by the

formula (1) is 50 wt% or more in relation to the whole of the repeating units.
[5] A forming material containing the polymer according to any one of [1] to [4].
[6] A resin formed article obtained by forming the forming material according to [5].

Advantageous Effects of Invention

According to the present invention, a novel polymer useful as a resin component of an optical formed article, a forming material containing the polymer, and a resin formed article obtained by forming the forming material are provided.

Description of Embodiments

1) A polymer, 2) a forming material, and 3) a resin formed article according to the exemplary embodiments of the present invention are described in detail below.

1) Polymer

The polymer of the present invention has the repeating unit represented by the following formula (1):

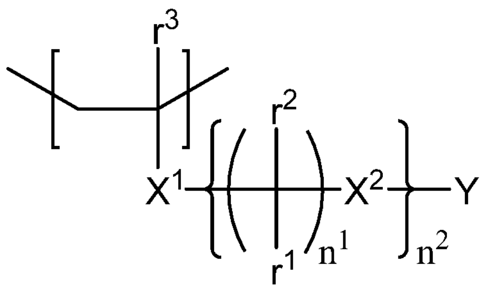

(1)

In the formula (1), $X^1$ and $X^2$ each independently represent an oxygen atom or a chemical single bond.
$r^1$ to $r^3$ each independently represent a hydrogen atom, or an alkyl group having 1 to 6 carbon atoms such as a methyl group, an ethyl group, an n-propyl group, an isopropyl group, an n-butyl group, or a t-butyl group. $r^1$ to $r^3$ are all preferably hydrogen atoms.
Y represents a monovalent group having the composition represented by the following formula (2):

$$C_pH_qO_r \qquad (2)$$

In the formula (2), p represents an integer of 8 to 21, preferably an integer of 11 to 21, q represents an integer of 7 to 40, preferably an integer of 12 to 40, and the value of (p/q) is more than 0.5, preferably 0.7 to 2.0. r represents an integer of 0 to 3, preferably an integer of 0 to 1.
Y is a portion affecting the refractive index of the polymer. When the value of (p/q) is 0.5 or less, the refractive index of the polymer tends to be lowered.
Y is preferably a group having a ring structure such as an alicyclic structure or an aromatic ring structure. When Y is a group having a ring structure, a polymer having a high refractive index tends to be easily obtained. When Y is a group having a ring structure, a dangling bond thereof usually extends from the carbon constituting the ring structure.
Examples of the group having a ring structure include the groups represented by the following formula (3) or (4):

[Groups represented by formula (3)]

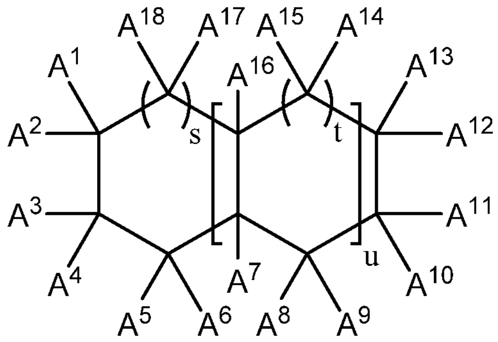

(3)

In the formula (3), any one of $A^1$ to $A^{18}$ is a dangling bond, and the rest of $A^1$ to $A^{18}$ each independently represent a hydrogen atom, a halogen atom, a hydrocarbon group, or a hydrocarbon group having an oxygen atom. $A^1$ to $A^{18}$ may be bonded to each other to form a ring(s).

s is an integer of 0 to 2, preferably an integer of 0 to 1, t is an integer of 0 to 2, preferably an integer of 0 to 1, and u is an integer of 0 or 1 or more, preferably an integer of 1 to 3.

Examples of the halogen atom in each of $A^1$ to $A^{18}$ include a fluorine atom, a chlorine atom and a bromine atom.

The number of carbon atoms of the hydrocarbon group in each of $A^1$ to $A^{18}$ is usually 1 to 20, and preferably 1 to 10.

Examples of the hydrocarbon group of each of $A^1$ to $A^{18}$ include: alkyl groups having one to 20 carbon atoms such as a methyl group, an ethyl group, an n-propyl group, an isopropyl group, an n-butyl group, a t-butyl group, an n-pentyl group, and an n-hexyl group; alkenyl groups having 2 to 20 carbon atoms such as a vinyl group, a 1-propenyl group, a 2-propenyl group, and a crotyl group; alkynyl groups having 2 to 20 carbon atoms such as an ethynyl group and a propargyl group; and aryl groups having 6 to 20 carbon atoms such as a phenyl group, a 1-naphthyl group, and a 2-naphthyl group.

Examples of the hydrocarbon group having an oxygen atom (a group obtained by introducing an oxygen atom into the hydrocarbon group) of each of $A^1$ to $A^{18}$ include: alkoxy groups having 1 to 20 carbon atoms such as a methoxy group and an ethoxy group; aryloxy groups such as a phenoxy group; and ether bond-containing groups such as a methoxymethyl group.

The ring(s) formed by bonding $A^1$ to $A^{18}$ to each other may be monocyclic or polycyclic. Such a ring may also have a double bond(s) within the ring.

Specific examples of the group represented by the formula (3) include the groups represented by the following formulas (5) to (7):

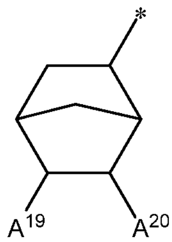

(5)

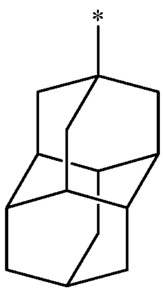

(6)

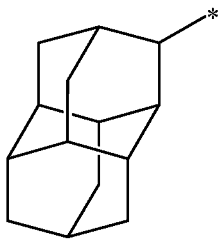

(7)

($A^{19}$ and $A^{20}$ each independently represent a hydrogen atom, a halogen atom, a hydrocarbon group, or a hydrocarbon group having an oxygen atom; $A^{19}$ and $A^{20}$ may be bonded to each other to form a ring(s); and * represents a dangling bond).

In the formula (5), $A^{19}$ and $A^{20}$ each independently represent a hydrogen atom, a halogen atom, a hydrocarbon group, or a hydrocarbon group having an oxygen atom. $A^{19}$ and $A^{20}$ may be bonded to each other to form a ring(s).

Specific examples of these groups include the same groups as shown as $A^1$ to $A^{18}$, and * represents a dangling bond.

Specific examples of the group represented by the formula (5) include the groups represented by the following formulas (16) to (21):

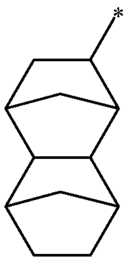 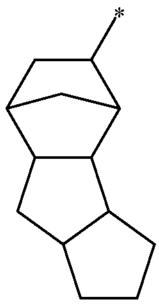 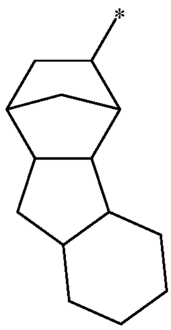 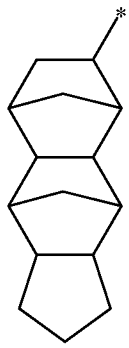 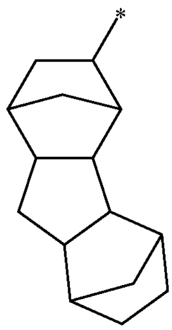 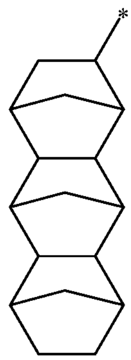

(16) (17) (18) (19) (20) (21)

[Groups represented by formula (4)]

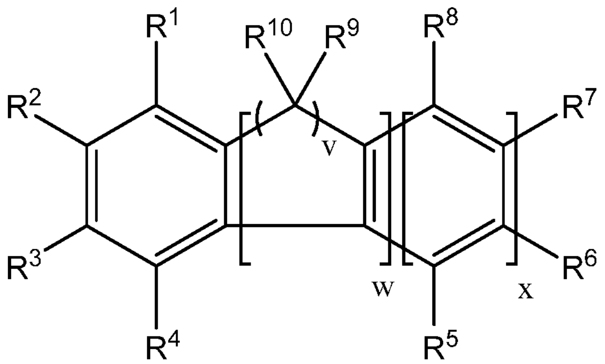

(4)

In the formula (4), any one of $R^1$ to $R^{10}$ is a dangling bond, and the rest of $R^1$ to $R^{10}$ each independently represent a hydrogen atom, a halogen atom, a hydrocarbon group, or a hydrocarbon group having an oxygen atom; and $R^1$ to $R^{10}$ may be bonded to each other to form a ring(s).

v is an integer of 0 to 2, preferably an integer of 1 to 2, w is 0 or 1, x is 0 or 1, and at least one of w and x is 1.

Specific examples of the halogen atom, the hydrocarbon group, and the hydrocarbon group having an oxygen atom of each of $R^1$ to $R^{10}$ include the same groups as shown as $A^1$ to $A^{18}$.

The ring(s) formed by bonding $R^1$ to $R^{10}$ to each other may be monocyclic or polycyclic. Such a ring may also have a double bond(s) within the ring.

Specific examples of the group represented by the formula (4) include the groups represented by the following formulas (11) to (15).

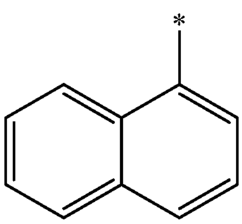 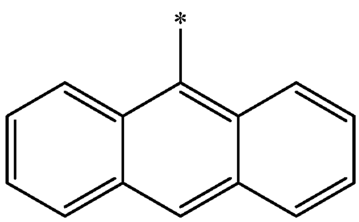 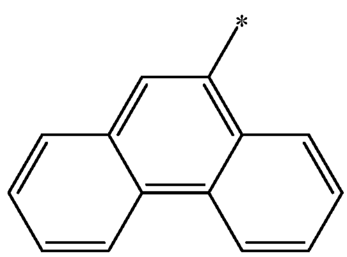

(11) (12) (13)

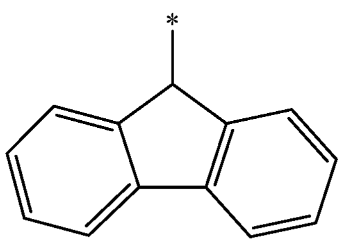

(14)

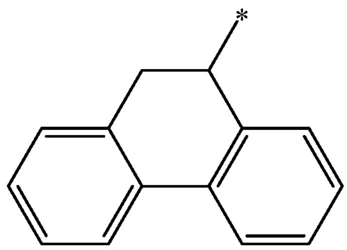

(15)

In the formula (1), $n^1$ and $n^2$ each independently represent an integer of 1 to 4, and preferably an integer of 1 or 2.

A group represented by $-X^1-\{[C(r^1)(r^2)]_{n1}-X^2\}_{n2}-$ is a portion affecting the glass transition temperature of the polymer. With the increase of the length of the group, the glass transition temperature of the polymer tends to be lowered.

The polymer of the present invention may have one type of the repeating unit represented by the formula (1), or may have two or more types of the repeating units represented by the formula (1).

Alternatively, as described later, the polymer of the present invention may have a repeating unit(s) other than the repeating unit represented by the formula (1).

The content of the repeating unit represented by the formula (1) contained in the polymer of the present invention is preferably 50 wt% or more, more preferably 70 wt% or more and still more preferably 80 wt% or more, in relation to the whole of the repeating units.

The weight average molecular weight (Mw) of the polymer of the present invention is preferably 10,000 to 300,000, more preferably 20,000 to 200,000, and particularly preferably 30,000 to 150,000. When the weight average molecular weight (Mw) of the polymer is too small, the strength of the resin formed article is liable to be decreased. On the other hand, when the weight average molecular weight (Mw) of the polymer is too large, the formability of the forming material is liable to be degraded.

The molecular weight distribution (Mw/Mn) of the polymer is not particularly limited, but is preferably 1 to 8, and more preferably 1 to 6.

When the molecular weight distribution of the polymer falls within the above-described range, a resin formed article having a sufficient mechanical strength can be obtained.

The weight average molecular weight (Mw) of the polymer and the number average molecular weight (Mn) of the polymer refer respectively to a standard polyisoprene-equivalent weight average molecular weight and a standard polyisoprene-equivalent number average molecular weight determined by gel permeation chromatography (GPC) (eluent: cyclohexane).

The method for producing the polymer of the present invention is not particularly limited. For example, the polymer of the present invention can be produced by performing an addition polymerization reaction by using a monomer represented by the following formula (22), corresponding to the repeating unit represented by the formula (1) :

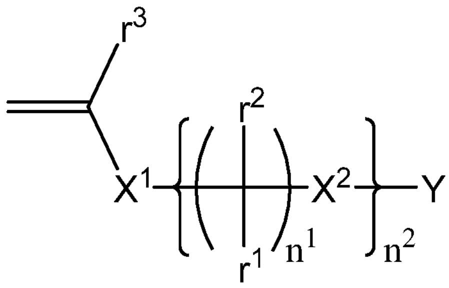

(22)

(In the formula, $X^1$, $X^2$, Y, $r^1$ to $r^3$, $n^1$, and $n^2$ represent the same meanings as described above).

The polymer having an alicyclic structure can also be obtained by performing an addition polymerization reaction by using a monomer having an aromatic ring structure, and by subsequently subjecting the obtained reaction product to a hydrogenation reaction.

Examples of the addition polymerization reaction include a radical polymerization reaction, an anionic polymerization reaction, a cationic polymerization reaction, and a coordination polymerization reaction. These addition polymerization reactions can be appropriately determined in consideration of the reactivity and the like of the monomer to be used.

For example, when a monomer in which $X^1$ in the formula (22) is a chemical single bond is used, it is preferable to perform the polymerization reaction by adopting the coordination polymerization reaction; when a monomer in which $X^1$ in the formula (22) is an oxygen atom is used, it is preferable to perform the polymerization reaction by adopting the cationic polymerization reaction.

The details of the reaction conditions in the coordination polymerization reaction is not particularly limited, and heretofore known methods can be appropriately used.

Examples of the polymerization catalyst used in the coordination polymerization reaction include: vanadium-based catalysts formed from vanadium compounds and organoaluminum compounds; titanium-based catalysts formed from titanium compounds and organoaluminum compounds; and zirconium-based catalysts formed from zirconium complexes and aluminoxanes.

These polymerization catalysts may be used either alone or in combination.

The amount of the polymerization catalyst used may be appropriately selected according to the polymerization conditions and the like; however, the amount of the polymerization catalyst used is usually 0.000001 to 0.1 mol and preferably 0.00001 to 0.01 mol in relation to 1 mol of the monomer.

The coordination polymerization reaction is usually conducted in an organic solvent. As the organic solvent, any organic solvent inert to polymerization reaction can be used.

Examples of the organic solvent to be used include: aromatic hydrocarbon-based solvents such as benzene, toluene and xylene; aliphatic hydrocarbon-based solvents such as n-pentane, n-hexane and n-heptane; alicyclic hydrocarbon-based solvents such as cyclohexane, methylcyclohexane, decalin and bicyclononane; and halogenated hydrocarbon-based solvents such as dichloroethane, chlorobenzene, dichlorobenzene and trichlorobenzene.

The polymerization temperature is usually -50 to +250°C, preferably -30 to +200°C, and more preferably -20 to +150°C.

The polymerization time is appropriately selected according to the polymerization conditions, and is usually 30 minutes to 20 hours, and preferably 1 to 10 hours.

The details of the reaction conditions in the cationic polymerization reaction are not particularly limited, and heretofore known methods can be appropriately used.

Examples of the cationic polymerization catalyst to be used in the cationic polymerization reaction include: boron compounds, silane compounds, ionic compounds, Bronsted acids, and metal compounds.

Examples of the boron compound include boron trifluoride, and boron trifluoride-diethyl ether complex.

Examples of the silane compound include: (chloromethyl)dimethylchlorosilane, chlorodimethylvinylsilane, (trifluoroacetoxy)trimethylsilane, chlorodimethylallylsilane, dimethyl(n-propyl)chlorosilane, dimethylisopropylchlorosilane, (3-cyanopropyl)dimethylchlorosilane, triethylbromosilane, triethylchlorosilane, t-butyldimethylchlorosilane, dimethylphenylchlorosilane, tributylchlorosilane, diphenylmethylchlorosilane, triphenylchlorosilane, and tribenzylchlorosilane.

Examples of the ionic compound include: sulfonium salts such as triphenylsulfonium hexafluorophosphate, and triphenylsulfonium hexafluoroantimonate; iodonium salts such as diphenyliodonium hexafluorophosphate, diphenyliodonium hexafluoroantimonate, bis(dodecylphenyl)iodonium tetrakis(pentafluorophenyl)borate, iodonium[4-(4-methylphenyl-2-methylpropyl)phenyl]hexafluorophosphate; and phosphonium salts such as tetrafluorophosphonium hexafluorophosphate.

Examples of the Bronsted acid include: sulfuric acid, nitric acid, hydrochloric acid, methanesulfonic acid, hexafluorophosphoric acid, hexafluoroantimonic acid, p-toluenesulfonic acid, and hydrofluoric acid.

Examples of the metal compound include: metal halides such as aluminum trichloride, aluminum tribromide, titanium tetrachloride, iron(III) chloride, iron(II) chloride, zinc dichloride, and tin tetrachloride; and alkylated metals such as triethylaluminum and diethylzinc.

The amount of the cationic polymerization catalyst used may be appropriately selected according to the polymerization conditions and the like; however, the amount of the cationic polymerization catalyst used is usually 0.000001 to 0.1 mol and preferably 0.00001 to 0.01 mol in relation to 1 mol of the monomer.

The cationic polymerization reaction is usually conducted in an organic solvent. Examples of the organic solvent include the same solvents as shown as the solvents in the coordination polymerization reaction.

The polymerization temperature is usually -50 to +250°C, preferably -30 to +200°C, and more preferably -20 to +150°C.

The polymerization time is appropriately selected according to the polymerization conditions, and is usually 30 minutes to 20 hours and preferably 1 to 10 hours.

When the polymer of the present invention is produced, other monomers copolymerizable with the monomer represented by the formula (22) can also be used.

Examples of the other monomers include: α-olefins having 2 to 20 carbon atoms such as ethylene, propylene, 1-butene, 1-pentene, and 1-hexene; aromatic vinyl compounds such as styrene and α-methylstyrene; and nonconjugated dienes such as 1,4-hexadiene, 4-methyl-1,4-hexadiene, 5-methyl-1,4-hexadiene and 1,7-octadiene. Among these, α-olefins are preferable, and ethylene is more preferable.

The other monomers may be used either alone or in combination. When the other monomer(s) is used, the amount thereof used is usually 1 to 20 mol%, preferably 1 to 10 mol%, in relation to the total amount of the monomer represented by the formula (22) and the other monomer(s).

When the two or more monomers represented by the formula (22) are used, or when the monomer represented by the formula (22) and the other monomer(s) are used, the polymer of the present invention may be a block copolymer or a random copolymer.

Many of the compounds represented by the formula (22) are known substances, can be produced by known methods and are available.

For example, the compound (22a) in which $X^1$ in the formula (22) is an oxygen atom can be produced as follows.

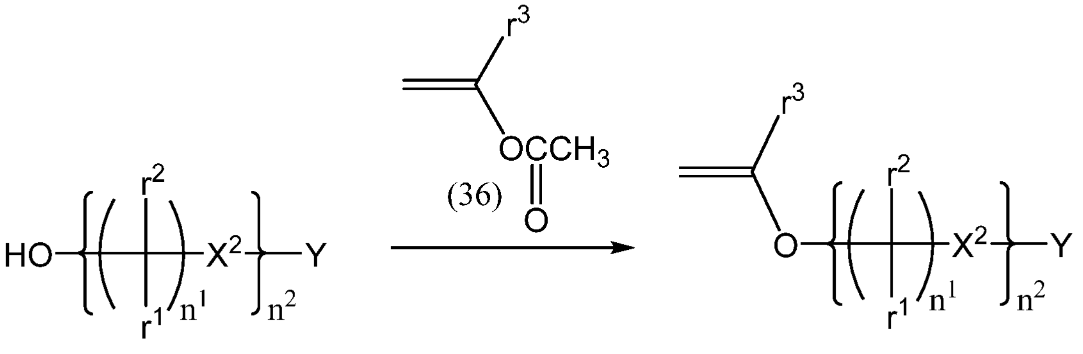

(36)

(35)

(22a)

Specifically, an alcohol compound represented by the formula (35) and a vinyl acetate compound represented by the formula (36) are allowed to react with each other, in the presence of a chloro(1,5-cyclooctadiene)iridium (I) dimer and sodium carbonate, and thus, the compound represented by the formula (22a) can be obtained (for example, Organic Syntheses, Vol. 82, pp. 55-48, 2005).

Alternatively, acetylene and an alcohol compound are allowed to react with each other in the presence of a metal alcoholate, and thus the compound represented by the formula (22a) can be obtained (for example, Japanese Patent Laid-Open No. 04-198144).

In addition, the compound (22b) in which $X^1$ in the formula (22) is a chemical single bond can be produced as follows.

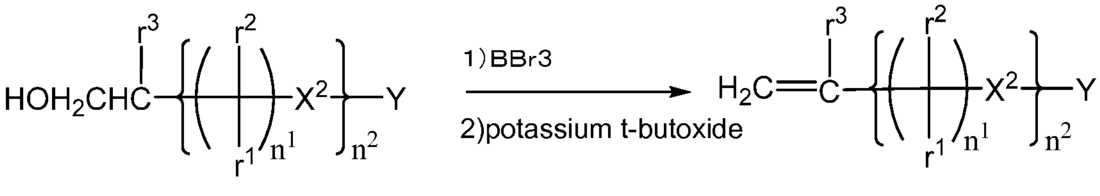


(37)

(22b)

Specifically, an alcohol compound represented by the formula (37) and boron tribromide ($BBr_3$) are allowed to react with each other, the resulting reaction mixture is treated with a strong base such as potassium t-butoxide, and thus the compound represented by the formula (22b) can be obtained (for example, Organic Syntheses collective volume 3, p. 370).

As described above, the polymer of the present invention has a group represented by Y, having an effect of increasing the refractive index of the polymer, and a group represented by "$-X^1-\{[C(r^1)(r^2)]_{n1}-X^1\}_{n2}-$", having an effect of decreasing the glass transition temperature of the polymer.

Accordingly, an appropriate combination of these allows a polymer having a high refractive index and a low glass transition temperature, unable to be obtained by conventional methods, to be obtained.

For example, in the polymer of the present invention, the relation between the glass transition temperature and the refractive index ($n_d$) preferably satisfies the following expression:

[Expression 1]

$$y \geqq 1.5 \times 10^{-4} x + 1.5275$$

[In the expression, x represents the glass transition temperature (°C) of the polymer, and y represents the refractive index ($n_d$) of the polymer at 25°C].

The glass transition temperature of the polymer of the present invention is preferably 50 to 200°C and more preferably 100 to 170°C.

The refractive index ($n_d$) at 25°C of the polymer of the present invention is preferably 1.53 to 1.80 and more preferably 1.54 to 1.70.

The Abbe number of the polymer of the present invention is preferably 50 or more or 35 or less, more preferably 54 or more or 30 or less, and particularly preferably 55 or more or 25 or less.

The Abbe number is a numerical value representing the degree of the refractive index at each wavelength of light (wavelength dispersion of refractive index). When the refractive indices of a material for the light rays at the F line (wavelength: 486.1 nm), the d line (wavelength: 587.6 nm), and the C line (wavelength: 656.3 nm) of the Fraunhofer lines are represented by $n_F$, $n_d$ and $n_C$, respectively, the Abbe number ($v_d$) is defined by the following expression (1):

[Expression 2]

$$\nu_d = (n_d - 1) / (n_F - n_C) \qquad (1)$$

A material having the larger Abbe number ($v_d$) has the smaller wavelength dispersion of the refractive index, and the smaller variation of the emerging angle of the light ray at each wavelength; a material having the smaller Abbe number has the larger wavelength dispersion of the refractive index, and the larger variation of the emerging angle of the light ray at each wavelength.

A polymer having an Abbe number ($v_d$) of 50 or more is preferably used as a production material of a low-dispersion optical member.

A polymer having an Abbe number ($v_d$) of 35 or less is preferably used as a production material of a high-dispersion optical member.

Usually, a low-dispersion optical member and a high-dispersion optical member are used in combination, and the dispersion of the emerging angle of light generated in the low-dispersion optical member is corrected by the high-dispersion optical member.

When the Abbe number of the polymer of the present invention is 50 or more, the relation between the refractive index ($n_d$) and the Abbe number ($v_d$) of the polymer of the present invention is such that preferably the refractive index ($n_d$) ≥ 1.53 and the Abbe number ($v_d$) ≥ 50, more preferably the refractive index ($n_d$) ≥ 1.54 and the Abbe number ($v_d$) ≥ 54, and still more preferably the refractive index ($n_d$) ≥ 1.55 and the Abbe number ($v_d$) ≥ 55. A polymer satisfying these relations is preferably used as a production material of a low-dispersion optical member.

When the Abbe number of the polymer of the present invention is 35 or less, the relation between the refractive index ($n_d$) and the Abbe number ($v_d$) of the polymer of the present invention is such that preferably the refractive index ($n_d$) ≥ 1.60 and the Abbe number ($v_d$) ≤ 35, more preferably the refractive index ($n_d$) ≥ 1.62 and the Abbe number ($v_d$) ≤ 30, and still more preferably the refractive index ($n_d$) ≥ 1.64 and the Abbe number ($v_d$) ≤ 25. A polymer satisfying these relations is preferably used as a production material of a high-dispersion optical member.

The polymer of the present invention has a low birefringence. The absolute value of the birefringence magnitude (δn) per unit thickness of the polymer of the present invention is preferably 0 to 80, and more preferably 0 to 50. The δn value can be obtained, for example, by the method described in Examples.

In order to develop a low birefringence of a polymer, there has hitherto been adopted a combination of a repeating unit having a positive birefringence and a repeating unit having a negative birefringence. For example, in an ethylene-norbornene-based addition copolymer, an ethylene-derived repeating unit having a positive birefringence and a norbornene-based monomer-derived repeating unit having a negative birefringence are combined, and thus a low birefringence is developed.

In this way, conventional low-birefringence polymers each include two or more types of repeating units, and at least one of the repeating units has a rigid structure in many cases, and in the main chains of such polymers, necessarily rigid structures are incorporated. Consequently, conventional low-birefringence polymers tend to be high in glass transition temperature.

On the other hand, the polymer of the present invention is allowed to develop low birefringence by methods different from conventional methods, and thus has a low birefringence even when only the repeating unit shown by the formula (1) is adopted.

In this way, even when the polymer of the present invention does not have a rigid structure in the main chain, the polymer of the present invention has a high refractive index and a low birefringence, and accordingly, an achievement of a high refractive index and an achievement of a low birefringence hardly cause a phenomenon of the increase of the glass transition temperature.

2) Forming material

The forming material of the present invention contains the polymer of the present invention.

The forming material may contain a resin component(s) other than the polymer of the present invention and other components such as an additive, within the ranges not impairing the advantageous effects of the present invention.

Examples of the resin component other than the polymer of the present invention (hereinafter, sometimes referred to as "the other resin component(s)") include: styrene-based polymers such as a styrene-butadiene block copolymer, a styrene-butadiene-styrene block copolymer, a styrene-isoprene block copolymer, a styrene-isoprene-styrene block copolymer, and the hydrogenated products of these; and a styrene-butadiene random copolymer.

When the forming material to be used in the present invention contains the other resin component(s), the content of the other resin component(s) is usually 0.1 to 100 parts by weight, and preferably 1 to 50 parts by weight, in relation to 100 parts by weight of the polymer of the present invention.

Examples of the additive include: an antioxidant, an UV absorber, a light stabilizer, a near-infrared absorber, a plasticizer, an antistatic agent, and an acid scavenger.

Examples of the antioxidant include a phenol-based antioxidant, a phosphorus-based antioxidant, and a sulfur-based antioxidant.

Examples of the phenol-based antioxidant include: 3,5-di-t-butyl-4-hydroxytoluene, dibutylhydroxytoluene, 2,2'-methylenebis(6-t-butyl-4-methylphenol), 4,4'-butylydenebis(3-t-butyl-3-methylphenol), 4,4'-thiobis(6-t-butyl-3-methylphenol), α-tocophenol, 2,2,4-trimethyl-6-hydroxy-7-t-butylchromane, tetrakis[methylene-3-(3',5'-di-t-butyl-4'-hydroxyphenyl)propionate]methane, and pentaerythritol tetrakis[3-(3,5-di-t-butyl-4-hydroxyphenyl)propionate].

Examples of the phosphorus-based antioxidant include: distearylpentaerythritol diphosphite, bis(2,4-di-t-butylphenyl)pentaerythritol diphosphite, tris(2,4-di-t-butylphenyl) phosphite, tetrakis(2,4-di-t-butylphenyl) 4,4'-biphenyl diphosphite, and trinonylphenyl phosphite.

Examples of the sulfur-based antioxidant include distearyl thiodipropionate and dilauryl thiodipropionate.

Examples of the UV absorber include a benzotriazole-based UV absorber, a benzoate-based UV absorber, a benzophenone-based UV absorber, an acrylate-based UV absorber, and a metal complex-based UV absorber.

Examples of the light stabilizer include a hindered amine-based light stabilizer.

Examples of the near-infrared absorber include a cyanine-based near-infrared absorber, a pyrylium-based infrared absorber, a squarylium-based near-infrared absorber, a croconium-based infrared absorber, an azulenium-based near-infrared absorber, a phthalocyanine-based near-infrared absorber, a dithiol metal complex-based near-infrared absorber, a naphthoquinone-based near-infrared absorber, an anthraquinone-based near-infrared absorber, an indophenol-based near-infrared absorber, and an azide-based near-infrared absorber.

Examples of the plasticizer include a phosphoric acid triester-based plasticizer, a fatty acid monobasic acid ester-based plasticizer, a dihydric alcohol ester-based plasticizer, and an oxy acid ester-based plasticizer.

Examples of the antistatic agent include a fatty acid ester of a polyhydric alcohol.

Examples of the acid scavenger include magnesium oxide and zinc stearate.

The contents of these additives may be appropriately determined taking account of the object.

The content is usually 0.001 to 5 parts by weight, and preferably 0.01 to 1 part by weight in relation to 100 parts by weight of the polymer of the present invention.

The forming material may be obtained by mixing the components according to an ordinary method. The components may be mixed in an appropriate solvent, or may be mixed (kneaded) in a molten state.

The components may be mixed (kneaded) using a melt mixer such as a single-screw extruder, a twin-screw extruder, a Banbury mixer, a kneader, or a feeder ruder.

The mixing (kneading) temperature is preferably 200 to 400°C, and more preferably 240 to 350°C. The components may be added at a time, and mixed (kneaded), or may be mixed (kneaded) while adding the components stepwise.

After mixing (kneading), according to an ordinary method, the mixed (kneaded) forming material is extruded into rod forms, the rods are cut to an appropriate length with a strand cutter, and thus the forming material can be prepared as pellets.

The forming material of the present invention contains the polymer of the present invention and is excellent in formability. The use of the forming material of the present invention allows a resin formed article having a high refractive

index and a low birefringence to be obtained. Accordingly, the forming material of the present invention is suitably used as the forming material of an optical formed article such as a lens.

3) Resin formed article

The resin formed article of the present invention is obtained by forming the forming material of the present invention.

The forming method is not particularly limited. Examples of the forming method include an injection forming method, a press forming method and an extrusion forming method. Among these, when the formed article is an optical member or the like, it is preferable to use an injection forming method since the desired resin formed article can be obtained with high accuracy.

The melting temperature employed during forming differs depending on the type of the forming material, but is normally 200 to 400°C, and preferably 210 to 350°C. When a mold is used, the mold temperature is normally set to 20°C to (Tg + 15)°C, preferably (Tg - 30)°C to (Tg + 10)°C, and more preferably (Tg - 20)°C to (Tg + 5)°C. It is to be noted that Tg is the glass transition temperature of the forming material.

The resin formed article of the present invention is obtained by forming the forming material of the present invention, and accordingly has a high refractive index and a low birefringence.

The resin formed article of the present invention is suitably used as an optical member such as an optical lens, a prism, and a light guide.

Examples

Hereinafter, the present invention is further described in detail by way of examples and comparative examples. It is to be noted that the present invention is not limited by following Examples. In what follows, the units "parts" and "%" respectively refer to "parts by weight" and "wt%", and the pressure is the gauge pressure, unless otherwise indicated.

The structure of the target product was identified by measuring the $^1$H-NMR spectrum.

The measurements of the physical properties were performed according to the following methods.

(1) Weight average molecular weight (Mw) and number average molecular weight (Mn)

The weight average molecular weight (Mw) (standard polyisoprene-equivalent weight average molecular weight) of the polymer was determined by gel permeation chromatography (GPC) (eluent: cyclohexane).

Standard polyisoprene (Mw = 602, 1390, 3920, 8050, 13800, 22700, 58800, 71300, 109000, 280000) manufactured by Tosoh Corporation was used as the standard polyisoprene.

The molecular weight was measured in a state in which three columns ("TSKgel G5000HXL", "TSKgel G4000HXL", and "TSKgel G2000HXL" manufactured by Tosoh Corporation) were connected in series (flow rate: 1.0 mL/min, sample injection amount: 100 μL, column temperature: 40°C).

(2) Glass transition temperature

The glass transition temperature (Tg) of the polymer was measured by using a differential scanning calorimeter ("DSC 6220SII" manufactured by NanoTechnology Inc.), in accordance with JIS K 6911, under the condition of the temperature increase rate of 10°C/min.

(3) Refractive indices

The polymer was formed into a 5-mm thick sheet form, and was allowed to stand in an atmosphere at [the glass transition temperature (Tg) of the polymer - 15]°C for 20 hours; then the thus treated sheet was used as a measurement sample.

The refractive indices at 25°C ($n_d$, $n_C$, $n_F$) of the obtained measurement sample were measured by using a precision refractometer (trade name: KPR-200, manufactured by Shimadzu Corporation, light sources = He lamp (587.6 nm), H2 lamp (656.3 nm, 486.1 nm).

In Tables 1 and 2, the refractive indices at a light wavelength of 587.6 nm are shown.

(4) Abbe number ($v_d$)

By using the refractive indices at 25°C ($n_d$, $n_C$, $n_F$) obtained by the refractive index measurement, the Abbe number ($v_d$) was calculated according to the following expression (1) :

[Expression 3]

$$\nu_d = (n_d - 1) / (n_F - n_C) \qquad (1)$$

In the expression (1), $n_d$, $n_C$, and $n_F$ represent the refractive indices at the wavelengths of 587.6 nm, 656.3 nm and 486.1 nm, respectively.

(5) Birefringence magnitude (δn) per unit thickness

The obtained polymer was formed into a shape of 35 mm × 10 mm × 1 mm. Both ends of the sheet were fixed with clips, and then a weight of 160 g was fixed at one of the clips. Subsequently, in an oven at [the glass transition temperature (Tg) of the polymer - 15]°C, a stretching treatment was performed by hanging the sheet for 10 minutes with the clip having no weight fixed thereto as the starting point, and the thus treated sheet was used as the measurement sample.

For the obtained measurement sample, the retardation value (this measured value is represented by a) in the central part of the measurement sample at a light wavelength of 650 nm was measured by using a birefringence meter (trade name: KOBRA-CCD/X, manufactured by Oji Scientific Instruments Co., Ltd.). The thickness of the central part of the measurement sample was measured (this measured value is represented by b), and the δn value was obtained with the expression:

$$\delta n = a \times (1/b).$$

The closer to 0 the δn value is, the smaller the birefringence is. The case where the birefringence is generated in the stretching direction exhibits a positive value; the case where the birefringence is generated in the direction perpendicular to the stretching direction exhibits a negative value.

[Production Example 1] Synthesis of alcohol compound 1

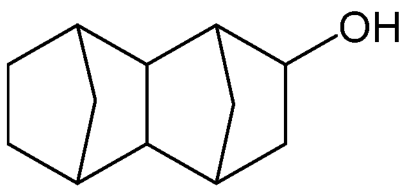

Alcohol compound 1

In a reactor in which the internal atmosphere had been replaced with nitrogen, tetracyclododecene (200 g) was placed and increased in temperature to 100°C. Subsequently, while the whole content was being stirred, formic acid (172 g) was added dropwise to the reactor over 1 hour. After the completion of the dropwise addition, the stirring was continued for further 8 hours. Toluene (400 g) was added to the obtained reaction solution, and the resulting mixture was washed three times with a saturated aqueous sodium hydrogen carbonate solution (300 mL), and then the organic layer was taken out by a liquid separation treatment.

The toluene in the organic layer was distilled off by using a rotary evaporator, and then the residue was transferred into a reactor equipped with a reflux condenser; subsequently, in the reactor, methanol (100 mL), distilled water (10 mL), and potassium hydroxide (55 g) were added, the whole content was increased in temperature to 65°C, and the resulting mixture was continuously stirred for 8 hours to perform a hydrolysis reaction.

Toluene (500 mL) was added to the reaction solution, the resulting mixture was washed three times with a 2N aqueous hydrogen chloride solution (300 mL), and then the organic layer was taken out by a liquid separation treatment.

The toluene in the organic layer was distilled off by using a rotary evaporator, the residue was distilled under a reduced pressure (87 to 90°C, 0.013 kPa), and thus 180 g of an alcohol compound 1 was obtained.

[Production Example 2] Synthesis of alcohol compound 2

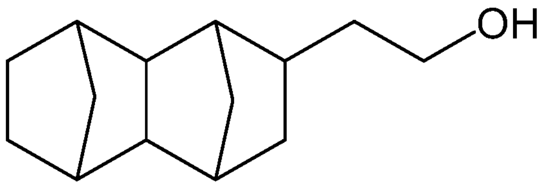

Alcohol compound 2

Into a stainless steel autoclave, dicyclopentadiene (100 g) and 3-buten-1-ol (500 g) were added, the atmosphere of the inside of the reaction system was replaced with nitrogen and the reaction system was sealed, and then while the whole content was being stirred, the whole content was heated to 220°C, and the reaction was allowed to proceed for 1 hour. Subsequently, the following operation was repeated twice: dicyclopentadiene (100 g) was further added to the reaction solution, the atmosphere of the inside of the reaction system was replaced with nitrogen and the reaction system was sealed, and then the reaction was allowed to proceed in the same manner as described above.

The reaction solution was transferred into an autoclave equipped with a stirrer, 100 parts of cyclohexane and a nickel catalyst supported on diatomaceous earth (trade name: T8400RL, nickel support rate: 58%, manufactured by Clariant) (0.5 g) were added to the autoclave. The atmosphere in the autoclave was replaced with hydrogen, and then a hydrogenation reaction was performed at 160°C, under a hydrogen pressure of 2.0 MPa, for 2 hours.

After the completion of the hydrogenation reaction, the reaction mixture was filtered through a pressure filter (trade name: FUNDABAC filter, manufactured by IHI Corporation) (filtration bed: diatomaceous earth (trade name: Radiolite (registered trademark) #500, manufactured by Showa Chemical Industry Co., Ltd.) under a pressure of 0.25 MPa to obtain a colorless and transparent solution. The cyclohexane in the obtained solution was distilled off by using a rotary evaporator, and the residue was distilled under a reduced pressure (113 to 116°C, 0.013 kPa), and thus 71 g of an alcohol compound 2 was obtained.

[Production Example 3] Synthesis of monomer 1

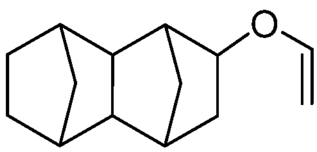

Monomer 1

Into a two-necked flask equipped with a three-way cock and a Dimroth condenser, chloro(1,5-cyclooctadiene)iridium(I) dimer (1.1 g) and sodium carbonate (15.7 g) were added, the inside of the reaction system was deaerated with a vacuum pump, the atmosphere inside the reaction system was replaced with nitrogen; then while the whole content was being stirred, toluene (164 mL), the alcohol compound 1 (29.2 g), and vinyl acetate (68.0 mL) were added in this order to the flask. Subsequently, the contents were heated at 100°C for 3 hours to allow the reaction to proceed, and then the reaction mixture was allowed to stand to cool to 25°C. The reaction mixture was filtered by using Celite, the filtrate was washed with water, and then the organic layer was taken out by a liquid separation treatment.

Subsequently, the organic layer was concentrated and dried under a reduced pressure by using an evaporator, and thus the solvent and the unreacted vinyl acetate in the organic layer were distilled off; the residue was distilled under a reduced pressure (80°C, 0.20 kPa), and thus 19.7 g of a monomer 1 was obtained.

[Production Example 4] Synthesis of monomer 2

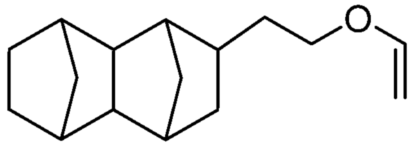

Monomer 2

A monomer 2 was obtained in the same manner as in Production Example 3 except that the alcohol compound 2 was used in place of the alcohol compound 1 in Production Example 3.

[Production Example 5] Synthesis of monomer 3

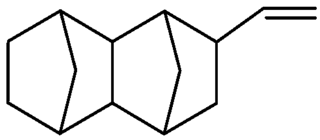

Monomer 3

Into a reactor in which the internal atmosphere had been replaced with nitrogen, the alcohol compound 2 (60 g) and diethyl ether (200 g) were added, and then while the whole content was being stirred, phosphorus tribromide (30 g) was added dropwise to the reactor at room temperature (25°C, hereinafter the same shall apply) over 1 hour. After the completion of the dropwise addition, the stirring was continued for further 23 hours, and thus a reaction solution was obtained. Toluene (400 g) was added to the reaction solution, the resulting mixture was washed three times with a saturated aqueous sodium hydrogen carbonate solution (300 mL), and then the organic layer was taken out by a liquid separation treatment.

Subsequently, while the solution of the organic layer was being stirred, potassium t-butoxide (50 g) was added to the solution at room temperature, the resulting mixture was continuously stirred for further 5 hours, and thus a reaction solution was obtained. Toluene (500 mL) was added to the reaction solution, the resulting mixture was washed three times with a 2N aqueous hydrogen chloride solution (300 mL), and the organic layer was taken out by a liquid separation treatment.

The toluene in the organic layer was distilled off by using a rotary evaporator, the residue was distilled under a reduced pressure (80 to 83°C, 0.13 kPa), and thus 25 g of a monomer 3 was obtained.

[Production Example 6] Synthesis of monomer 4

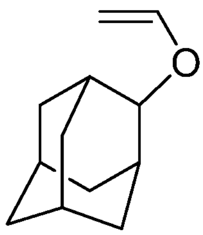

Monomer 4

A monomer 4 was obtained in the same manner as in Production Example 3 except that 2-adamantanol was used in place of the alcohol compound 1 in the Production Example 3.

[Production Example 7] Synthesis of alcohol compound 3

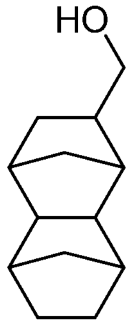

Alcohol compound 3

Into a stainless steel autoclave, dicyclopentadiene (100 g) and allyl acetate (500 g) were added, the atmosphere of the inside of the reaction system was replaced with nitrogen and the reaction system was sealed, and then while the whole content was being stirred, the whole content was heated to 220°C, and the reaction was allowed to proceed for 1 hour. Subsequently, the following operation was repeated twice: dicyclopentadiene (100 g) was further added to the reaction solution, the atmosphere of the inside of the reaction system was replaced with nitrogen and the reaction system was sealed, and then the reaction was allowed to proceed in the same manner as described above.

The reaction solution was transferred into an autoclave equipped with a stirrer, 100 parts of cyclohexane and 0.5 g of a nickel catalyst supported on diatomaceous earth (trade name: T8400RL, nickel support rate: 58%, manufactured by Clariant) were added to the autoclave. The atmosphere in the autoclave was replaced with hydrogen, and then a hydrogenation reaction was performed at 160°C, under a hydrogen pressure of 2.0 MPa, for 2 hours.

After the completion of the hydrogenation reaction, the reaction mixture was filtered through a pressure filter (trade name: FUNDABAC filter, manufactured by IHI Corporation) (filtration bed: diatomaceous earth (trade name: Radiolite (registered trademark) #500, manufactured by Showa Chemical Industry Co., Ltd.) under a pressure of 0.25 MPa to obtain a colorless and transparent solution.

The cyclohexane in the obtained solution was distilled off by using a rotary evaporator, and then the residue was dissolved in methanol. To the obtained solution, 100 g of sodium hydroxide was added, and the whole content was stirred at room temperature for 24 hours. The methanol in the obtained solution was distilled off by using a rotary evaporator, then the solution was filtered with a filter paper, and thus a yellowish liquid was obtained.

The yellowish liquid was distilled under a reduced pressure (89°C, 0.04 kPa), and thus 71 g of an alcohol compound 3 was obtained.

[Production Example 8] Synthesis of alcohol compound 4

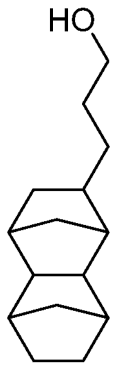

Alcohol compound 4

An alcohol compound 4 was obtained by performing a distillation under a reduced pressure (113°C, 0.05 kPa) in the same manner as in Production Example 2 except that 4-penten-1-ol was used in place of 3-buten-1-ol in Production Example 2.

[Production Example 9] Synthesis of alcohol compound 5

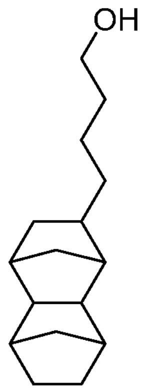

Alcohol compound 5

An alcohol compound 5 was obtained by performing a distillation under a reduced pressure (126°C, 0.05 kPa) in the same manner as in Production Example 2 except that 5-hexen-1-ol was used in place of 3-buten-1-ol in Production Example 2.

[Production Example 10] Synthesis of monomer 5

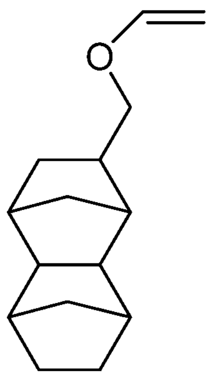

Monomer 5

Into a two-necked flask equipped with a three-way cock and a Dimroth condenser, chloro(1,5-cyclooctadiene)iridium(I) dimer (1.2 g, 1.75 mmol) and 16.8 g of sodium carbonate were added, the inside of the reaction system was deaerated with a vacuum pump, the atmosphere inside the reaction system was replaced with nitrogen, and then 176 mL of toluene, the alcohol compound 3 (33.61 g, 0.175 mol), and vinyl acetate (40.37 mL, 0.438 mol) were added in this order under stirring to the flask. The obtained mixture was heated and stirred at 100°C for 3 hours, and then allowed to air cool to room temperature. The reaction mixture was filtered by using Celite, water was added to the filtrate to perform a liquid separation, and the organic layer was taken out. The solvent and the unreacted vinyl acetate were distilled off from the organic layer by using an evaporator, and then the obtained residue was distilled under reduced pressure. The purification based on distillation under reduced pressure was repeated further twice, and thus a monomer 5 was obtained (66.5°C, 0.2 kPa). Yield: 19.41 g, percent yield: 50.9%.

[Production Example 11] Synthesis of monomer 6

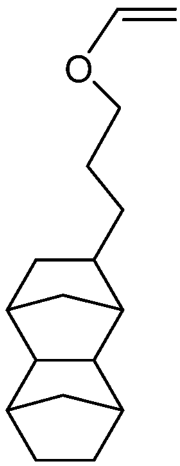

Monomer 6

Into a two-necked flask equipped with a three-way cock and a Dimroth condenser, chloro(1,5-cyclooctadiene)iridium(I) dimer (0.58 g, 0.863 mmol) and 8.26 g of sodium carbonate were added, the inside of the reaction system was deaerated with a vacuum pump, the atmosphere inside the reaction system was replaced with nitrogen, and then 86 mL of toluene, the alcohol compound 4 (19.01 g, 0.0863 mol), and vinyl acetate (19.9 mL, 0.216 mol) were added in this order under stirring to the flask. The obtained liquid mixture was heated and stirred at 100°C for 3 hours, and then allowed to air cool to room temperature; then the reaction mixture was filtered by using Celite. Water was added to the filtrate, thus a liquid separation was performed, and the organic layer was taken out. The solvent and the unreacted vinyl acetate were distilled off from the organic layer by using an evaporator, and then the obtained residue was distilled under reduced pressure. The purification based on distillation under reduced pressure was further repeated, and thus a monomer 6 was obtained (95°C, 0.2 kPa). Yield: 12.58 g, percent yield: 59.2%.

[Production Example 11] Synthesis of monomer 7

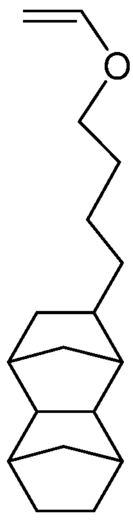

Monomer 7

Into a two-necked flask equipped with a three-way cock and a Dimroth condenser, chloro(1,5-cyclooctadiene)iridium(I) dimer (0.77 g, 1.16 mmol) and 11.1 g of sodium carbonate wee added, the inside of the reaction system was deaerated with a vacuum pump, the atmosphere inside the reaction system was replaced with nitrogen, and then, 116 mL of toluene, the alcohol compound 5 (27.14 g, 0.116 mol), and vinyl acetate (27.6 mL, 0.300 mol) were added in this order under stirring to the flask. The obtained mixture was heated and stirred at 100°C for 3 hours, and then allowed to air cool to room temperature; then, the reaction mixture was filtered by using Celite. Water was added to the filtrate,

thus a liquid separation was performed, and the organic layer was taken out. The solvent and the unreacted vinyl acetate were distilled off from the organic layer by using an evaporator, and then the obtained residue was distilled under reduced pressure. The purification based on distillation under reduced pressure was repeated further twice, and thus a monomer 7 was obtained (125°C, 0.2 kPa). Yield: 16.20 g, percent yield: 53.4%.

[Production Example 12] Synthesis of monomer 8

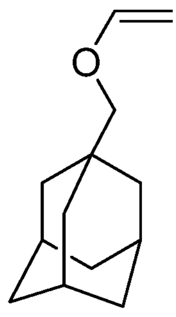

Monomer 8

Into a two-necked flask equipped with a three-way cock and a Dimroth condenser, chloro(1,5-cyclooctadiene)iridium(I) dimer (1.05 g, 1.50 mmol) and 14.4 g of sodium carbonate were added, the inside of the reaction system was deaerated with a vacuum pump, the atmosphere inside the reaction system was replaced with nitrogen, and then, 164 mL of toluene 1-adamantanemethanol (25.0 g, 0.150 mol, manufactured by Tokyo Chemical Industry Co., Ltd.), and vinyl acetate (68.0 mL, 0.675 mol) were added in this order under stirring to the flask. The obtained mixture was heated and stirred at 100°C for 3 hours, and then allowed to air cool to room temperature; then, the reaction mixture was filtered by using Celite. Water was added to the filtrate, thus a liquid separation was performed, and the organic layer was taken out. The solvent and the unreacted vinyl acetate were distilled off from the organic layer by using an evaporator, and thus a crude product was obtained. The crude product was recrystallized from methanol, and thus a monomer 8 was obtained. Yield: 11.74 g, percent yield: 40.7%.

[Production Example 13] Synthesis of monomer 9

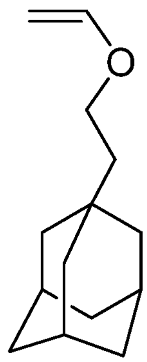

Monomer 9

Into a two-necked flask equipped with a three-way cock and a Dimroth condenser, chloro(1,5-cyclooctadiene)iridium(I) dimer (0.934 g, 139 mmol) and 13.3 g of sodium carbonate were added, the inside of the reaction system was deaerated with a vacuum pump, the atmosphere inside the reaction system was replaced with nitrogen, and then, 164 mL of toluene, 1-adamantaneethanol (25.0 g, 0.139 mol, manufactured by Tokyo Chemical Industry Co., Ltd.), and vinyl acetate (57.7 mL, 0.626 mol) were added in this order under stirring to the flask. The obtained mixture was heated and stirred at 100°C for 3 hours, and then allowed to air cool to room temperature; then, the reaction mixture was filtered by using Celite. Water was added to the filtrate, thus a liquid separation was performed, and the organic layer was taken out. The solvent and the unreacted vinyl acetate were distilled off from the organic layer by using an evaporator. The

obtained residue was distilled under reduced pressure. The purification based on distillation under reduced pressure was repeated further twice, and thus a monomer 9 was obtained (79°C, 0.3 kPa). Yield: 12.61 g, percent yield: 44.0%.

[Production Example 14] Synthesis of monomer 10

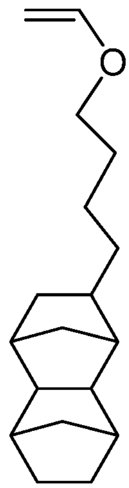

Monomer 10

A monomer 10 was obtained by performing the same operations as in Production Example 5 except that the alcohol compound 4 was used in place of the alcohol compound 2 in Production Example 5, and by performing a distillation under a reduced pressure (61°C, 0.04 kPa).

[Production Example 15] Synthesis of monomer 11

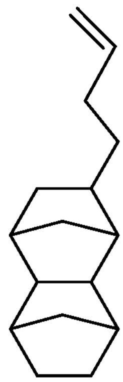

Monomer 11

A monomer 11 was obtained by performing the same operations as in Production Example 5 except that the alcohol compound 5 was used in place of the alcohol compound 2 in Production Example 5, and by performing a distillation under a reduced pressure (81°C, 0.06 kPa).

[Example 1]

Into an eggplant-shaped flask the inside of which had been dried, equipped with a three-way cock, 17.2 mL of the monomer 2 and 50.3 mL of toluene were added, in a nitrogen atmosphere, and then the eggplant-shaped flask was cooled to -30°C. Subsequently, 7.5 mL of a polymerization initiator solution (BF3·C4H100: 0.3 mL, toluene: 14.7 mL) was added to the flask, and the contents were stirred at the same temperature for 1 hour. After the completion of the

polymerization reaction, 30 mL of a reaction terminator (10 vol% ammonia water/methanol mixed solvent (1/9)) was added to terminate the polymerization reaction. The precipitated polymer was filtered out, and completely dissolved in toluene to obtain a solution. The resulting solution was washed with ion-exchanged water, and then the solvent contained in the solution was distilled off by using an evaporator. The solution obtained by dissolving the residue in tetrahydrofuran (THF) was poured into a large amount of methanol to reprecipitate the polymer.

The obtained polymer was filtered out, and the polymer was dried under reduced pressure to obtain 16.5 g of a polymer 1 having a repeating unit represented by the following formula (23).

By using the polymer 1, the various measurements were performed. The results thus obtained are shown in Table 1.

[Example 2]

Into an eggplant-shaped flask equipped with a three-way cock, having been dried by heating with a heating gun for 10 minutes in a flow of nitrogen, 15.84 mL of the monomer 5 and 51.61 mL of toluene were added by using a syringe in a nitrogen atmosphere, then the eggplant-shaped flask was cooled to -30°C, 7.5 mL of an initiator solution (BF3OEt2: 0.3 mL, toluene: 14.7 mL) was added, and the whole content was stirred at the same temperature for 1.5 hours. After the completion of the polymerization reaction, 30 mL of a terminator (10 vol% ammonia water/methanol = 1/9) was added to terminate the polymerization. Subsequently, the precipitated polymer was completely dissolved in toluene, the obtained solution was washed with ion-exchanged water, and then the solvent was distilled off by using an evaporator. The polymer was dissolved in THF, the obtained solution was poured into a large amount of methanol to reprecipitate the polymer, the precipitated polymer was dried under reduced pressure, and thus 14.54 g of a polymer 2 having the repeating unit represented by the following formula (28) was obtained. Percent yield: 88.8%

By using the polymer 2, the various measurements were performed. The results thus obtained are shown in Table 1.

[Example 3]

Into an eggplant-shaped flask equipped with a three-way cock, having been dried by heating with a heating gun for 10 minutes in a flow of nitrogen, 11.27 mL of the monomer 6 and 29.23 mL of toluene were added by using a syringe in a nitrogen atmosphere, and then the eggplant-shaped flask was cooled to -30°C. Into the flask, 4.5 mL of an initiator solution (BF3OEt2: 0.3 mL, toluene: 14.7 mL) was added, and the whole content was stirred at the same temperature for 1 hour. After the completion of the polymerization reaction, 30 mL of a terminator (10 vol% ammonia water/methanol = 1/9) was added to terminate the polymerization. Subsequently, the precipitated polymer was completely dissolved in toluene, the obtained solution was washed with ion-exchanged water, and then the solvent was distilled off by using an evaporator. The polymer was dissolved in THF, the obtained solution was poured into a large amount of methanol to reprecipitate the polymer, the precipitated polymer was dried under reduced pressure, and thus 7.85 g of a polymer 3 having the repeating unit represented by the following formula (29) was obtained. Percent yield: 70.7%.

By using the polymer 3, the various measurements were performed. The results thus obtained are shown in Table 1.

[Example 4]

In a 100-mL autoclave in which the internal atmosphere had been replaced with nitrogen, a stirring bar, 30 mL of toluene, 174 mg of methylaluminoxane, and 2 g of the monomer 10 were placed, and a catalyst solution [1 mL of a toluene solution containing 0.25 mol of $CpTi(N{=}C(t\text{-}Bu)_2)Cl_2$] was added while the whole content was being stirred at 25°C. After the addition of the catalyst solution, the addition polymerization reaction was performed for further 24 hours. After the completion of the reaction, the autoclave was depressurized, the content in the autoclave was transferred into a large amount of 2-propanol acidified with hydrochloric acid, and thus the polymer was precipitated. The precipitated polymer was dried under reduced pressure, and a polymer 4 having the repeating unit represented by the following formula (30) was obtained.

By using the polymer 4, the various measurements were performed. The results thus obtained are shown in Table 1.

[Example 5]

A polymer 5 having the repeating unit represented by the following formula (31) was obtained in the same manner as in Example 4 except that the monomer 11 was used in place of the monomer 10 in Example 4.

By using the polymer 5, the various measurements were performed. The results thus obtained are shown in

Table 1.

[Comparative Example 1]

Into an eggplant-shaped flask equipped with a three-way cock, having been dried by heating with a heating gun for 10 minutes in a flow of nitrogen, 10.0 mL of the monomer 3 and 10.0 mL of toluene were added by using a syringe in a nitrogen atmosphere. The eggplant-shaped flask was cooled to -30°C, 2.5 mL of an initiator solution (HCl: 0.25 mL, toluene: 99.75 mL) and 2.5 mL of an activating agent solution ($ZnCl_2$: 0.1 mL, toluene: 19.9 mL) were added to the flask, and the whole content was stirred at the same temperature for 96 hours. After the completion of the reaction, 30 mL of a terminator (10 vol% ammonia water/methanol = 1/9) was added to the reaction solution to terminate the polymerization. Subsequently, the precipitated polymer was completely dissolved in toluene, the obtained solution was washed with ion-exchanged water, and then the solvent was distilled off by using an evaporator. The polymer was dissolved in THF, the obtained solution was poured into a large amount of methanol to reprecipitate the polymer, the precipitated polymer was dried under reduced pressure, and thus 9.86 g of a polymer 6 having the repeating unit represented by the following formula (24) was obtained. Percent yield: 97.0%.

By using the polymer 6, the various measurements were performed. The results thus obtained are shown in Table 2.

[Comparative Example 2]

A polymer 7 having the repeating unit represented by the following formula (25) was obtained in the same manner as in Example 1 except that the monomer 4 was used in place of the monomer 2 in Example 1, and various measurements were performed. The results thus obtained are shown in Table 2.

[Comparative Example 3]

According to the method described in Japanese Patent Laid-Open No. 2005-113049, a polymer 8 having the repeating unit represented by the following formula (26) was obtained, and various measurements were performed. The results thus obtained are shown in Table 2.

[Comparative Example 4]

In a 15-mL screw tube bottle in which the internal atmosphere had been replaced with nitrogen, 174 mg of white solid MAO (methylaluminoxane), 8 g of toluene, and 2 g of the monomer 3 were placed. Into the screw tube bottle, 1 mL of a toluene solution (5 mmol/L) of a metal complex ($CpTi(N=C(t\text{-}B_u)_2)Cl_2$) was added, and the whole content was stirred at 25°C for 120 hours to perform the polymerization reaction. Subsequently, the content of the screw tube bottle was transferred into a large amount of 2-propanol acidified with hydrochloric acid, and thus the polymer was precipitated. The obtained polymer was filtered out, the polymer was dried under reduced pressure to obtain a polymer 9 having a repeating unit represented by the following formula (27), and various measurements were performed. The results thus obtained are shown in Table 2.

[Comparative Example 5]

Into an eggplant-shaped flask equipped with a three-way cock, having been dried by heating with a heating gun for 10 minutes in a flow of nitrogen, 12.23 mL of the monomer 7 and 32.77 mL of toluene were added by using a syringe in a nitrogen atmosphere. The eggplant-shaped flask was cooled to -30°C, 5.0 mL of an initiator solution ($BF_3OEt_2$: 0.3 mL, toluene: 14.7 mL) was added to the flask, and the whole content was stirred at the same temperature for 0.5 hour. After the completion of the reaction, 30 mL of a terminator (10 vol% ammonia water/methanol = 1/9) was added to the reaction solution to terminate the polymerization. Subsequently, the precipitated polymer was completely dissolved in toluene, the obtained solution was subjected to a liquid separation purification with ion-exchanged water, and then the solvent was distilled off by using an evaporator. The polymer was dissolved in THF, the obtained solution was poured into a large amount of methanol to reprecipitate the polymer, the precipitated polymer was dried under reduced pressure, and thus 10.2 g of a polymer 10 having the repeating unit represented by the following formula (32) was obtained. Percent yield: 78.6%.

By using the polymer 10, the various measurements were performed. The results thus obtained are shown in Table 2.

[Comparative Example 6]

Into an eggplant-shaped flask equipped with a three-way cock, having been dried by heating with a heating gun for 10 minutes in a flow of nitrogen, 9.61 g of the monomer 8 and 35.4 mL of toluene were added by using a syringe in a nitrogen atmosphere. The eggplant-shaped flask was cooled to -30°C, 5.0 mL of an initiator solution ($BF_3OEt_2$: 0.3 mL, toluene: 14.7 mL) was added to the flask, and the whole content was stirred at the same temperature for 4 hours. After the completion of the reaction, 30 mL of a terminator (10 vol% ammonia water/methanol = 1/9) was added to the reaction solution to terminate the polymerization. Subsequently, the precipitated polymer was completely dissolved in toluene, the obtained solution was washed with ion-exchanged water, and then the solvent was distilled off by using an evaporator. The polymer was dissolved in THF, the obtained solution was poured into a large amount of methanol to reprecipitate the polymer, the precipitated polymer was dried under reduced pressure, and thus 9.04 g of a polymer 11 having the repeating unit represented by the following formula (33) was obtained. Percent yield: 94.1%.

By using the polymer 11, the various measurements were performed. The results thus obtained are shown in Table 2.

[Comparative Example 7]

Into an eggplant-shaped flask equipped with a three-way cock, having been dried by heating with a heating gun for 10 minutes in a flow of nitrogen, 10.5 mL of the monomer 9 and 34.5 mL of toluene were added by using a syringe in a nitrogen atmosphere. The eggplant-shaped flask was cooled to -30°C, 5.0 mL of an initiator solution ($BF_3OEt_2$: 0.3 mL, toluene: 14.7 mL) was added to the flask, and the whole content was stirred at the same temperature for 4 hours. After the completion of the reaction, 30 mL of a terminator (10 vol% ammonia water/methanol = 1/9) was added to the reaction solution to terminate the polymerization. Subsequently, the precipitated polymer was completely dissolved in toluene, the obtained solution was washed with ion-exchanged water, and then the solvent was distilled off by using an evaporator. The polymer was dissolved in THF, the obtained solution was poured into a large amount of methanol to reprecipitate the polymer, the precipitated polymer was dried under reduced pressure, and thus 9.57 g of a polymer 12 having the repeating unit represented by the following formula (34) was obtained. Percent yield: 92.8%.

By using the polymer 12, the various measurements were performed. The results thus obtained are shown in Table 2.

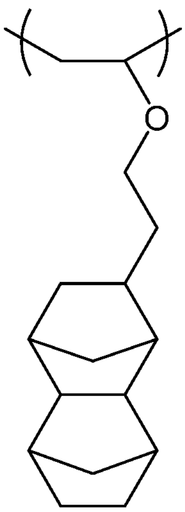 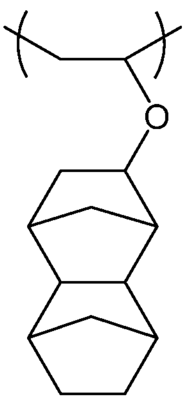 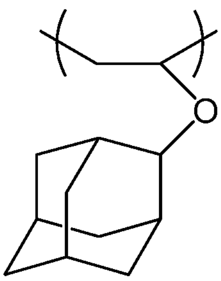 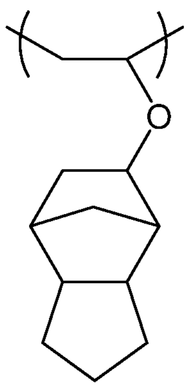 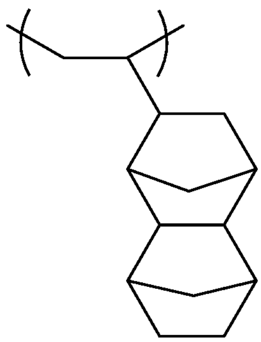

(23) (24) (25) (26) (27)

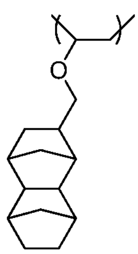
(28)

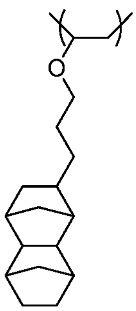
(29)

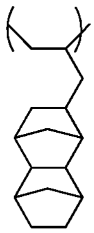
(30)

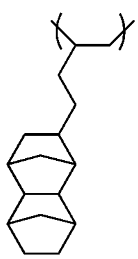
(31)

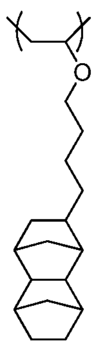
(32)

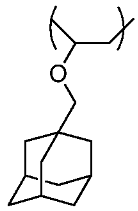
(33)

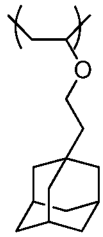
(34)

Table 1

| | Example | | | | |
|---|---|---|---|---|---|
| | 1 | 2 | 3 | 4 | 5 |
| Weight average molecular weight | 227000 | 60800 | 76800 | 143000 | 122000 |
| Molecular weight distribution | 6.18 | 2.12 | 3.73 | 2.20 | 5.39 |
| Glass transition temperature (°C) | 60.0 | 78.4 | 34.1 | 131.6 | 97.8 |
| Refractive index $n_d$ | 1.5440 | 1.5470 | 1.5410 | 1.5483 | 1.5480 |
| Abbe number $V_d$ | 56 | 56 | 57 | 56 | 56 |
| Birefringence magnitude per unit thickness: $\delta n$ | -25 | -10 | -25 | -35 | -35 |

Table 2

| | Comparative Example | | | | | | |
|---|---|---|---|---|---|---|---|
| | 1 | 2 | 3 | 4 | 5 | 6 | 7 |
| Weight average molecular weight | 125400 | 59800 | 186000 | 40300 | 54000 | 146400 | 53700 |
| Molecular weight distribution | 3.86 | 3.47 | 5.48 | 2.05 | 4.09 | 8.48 | 3.32 |
| Glass transition temperature (°C) | 127.1 | 178.0 | 104.0 | 164.0 | 19.8 | 133.1 | 76.8 |
| Refractive index $n_d$ | 1.542 | 1.530 | 1.528 | 1.550 | 1.537 | 1.524 | 1.532 |
| Abbe number $v_d$ | 57 | 56 | 56 | 56 | 56 | 54 | 55 |
| Birefringence magnitude per unit thickness: $\delta n$ | -110 | -50 | -130 | -170 | -10 | -50 | -50 |

From Tables 1 and 2, the following are found.

The polymers obtained in Examples 1 to 5 are high in refractive index and low in birefringence, and have relatively low glass transition temperatures.

On the other hand, the polymer of Comparative Example 1 does not have a low birefringence.

The polymer of Comparative Example 2 has a high glass transition temperature.

The polymer of Comparative Example 3 does not have a low birefringence, and is low in refractive index.

The polymer of Comparative Example 4 does not have a low birefringence.

## Claims

**1.** A polymer having a repeating unit represented by the following formula (1) :

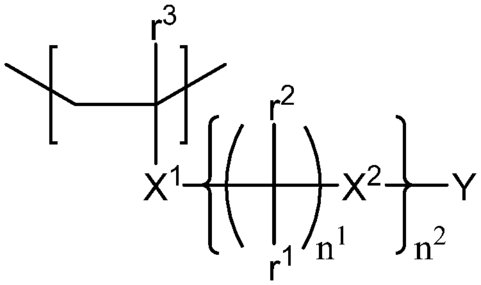

(1)

[$X^1$ and $X^2$ each independently represent an oxygen atom or a chemical single bond, and $r^1$ to $r^3$ each independently represent a hydrogen atom or an alkyl group having 1 to 6 carbon atoms; Y represents a monovalent group having a composition represented by the following formula (2):

$C_pH_qO_r$ (2)

(p represents an integer of 8 to 21, q represents an integer of 7 to 40, the value of (p/q) is larger than 0.5, and r represents an integer of 0 to 3); and $n^1$ and $n^2$ each independently represent an integer of 1 to 4].

2. The polymer according to claim 1, wherein Y is a group represented by the following formula (3):

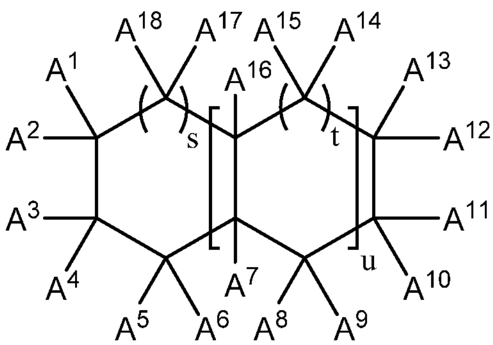

(3)

(any one of $A^1$ to $A^{18}$ is a dangling bond, and the rest of $A^1$ to $A^{18}$ each independently represent a hydrogen atom, a halogen atom, a hydrocarbon group, or a hydrocarbon group having an oxygen atom; $A^1$ to $A^{18}$ may be bonded to each other to form a ring(s); and s represents an integer of 0 to 2, t represents an integer of 0 to 2, and u represents an integer equal to 0 or 1 or more).

3. The polymer according to claim 2, wherein Y is a group represented by any one of the following formulas (5) to (7):

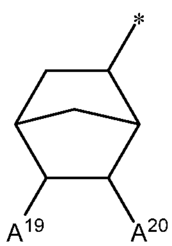

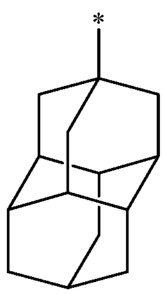

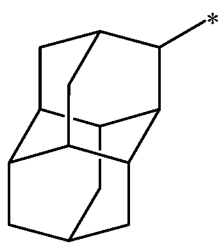

(5) (6) (7)

($A^{19}$ and $A^{20}$ each independently represent a hydrogen atom, a halogen atom, a hydrocarbon group, or a hydrocarbon group having an oxygen atom; $A^{19}$ and $A^{20}$ may be bonded to each other to form a ring; and * represents a dangling bond).

4. The polymer according to any one of claims 1 to 3, wherein the content of the repeating unit represented by the formula (1) is 50 wt% or more in relation to the whole of the repeating units.

5. A forming material containing the polymer according to any one of claims 1 to 4.

6. A resin formed article obtained by forming the forming material according to claim 5.

## INTERNATIONAL SEARCH REPORT

International application No.
PCT/JP2016/054203

A. CLASSIFICATION OF SUBJECT MATTER
*C08F16/10*(2006.01)i

According to International Patent Classification (IPC) or to both national classification and IPC

B. FIELDS SEARCHED

Minimum documentation searched (classification system followed by classification symbols)
C08F16/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2005-113049 A (Maruzen Petrochemical Co., Ltd.), 28 April 2005 (28.04.2005), claim 1; paragraph [0001]; example 1 (Family: none) | 1-6 |
| X | JP 2005-187703 A (Maruzen Petrochemical Co., Ltd.), 14 July 2005 (14.07.2005), claim 1; paragraph [0001]; preparation example 5 (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 April 2016 (18.04.16) | 26 April 2016 (26.04.16) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2016/054203

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2010-032627 A (JSR Corp.), 12 February 2010 (12.02.2010), claims 1 to 3; paragraph [0029]; synthesis example 4 (Family: none) | 1-3,5,6<br>4 |
| X<br>A | JP 2010-174128 A (Nippon Oil Corp.), 12 August 2010 (12.08.2010), claim 1; example 1 (Family: none) | 1-3,5,6<br>4 |
| X<br>A | JP 6-107729 A (Mitsui Petrochemical Industries, Ltd.), 19 April 1994 (19.04.1994), claim 1; example 1 (Family: none) | 1,4-6<br>2,3 |
| A | JP 2010-077331 A (Nippon Carbide Industries Co., Inc.), 08 April 2010 (08.04.2010), entire text (Family: none) | 1-6 |
| A | JP 2005-023049 A (Daicel Chemical Industries, Ltd.), 27 January 2005 (27.01.2005), entire text (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009197139 A
- JP 4198144 A
- JP 2005113049 A


### Non-patent literature cited in the description


- *Organic Syntheses,* 2005, vol. 82, 55-48
- *Organic Syntheses collective,* vol. 3, 370